# EUROPEAN PATENT APPLICATION

(11) **EP 3 480 230 A1**
(43) Date of publication of application: **08.05.2019**
(21) Application number: 17200329.5
(22) Date of filing: 07.11.2017
(51) Int. Cl.: C08G 18/08, C08G 18/44, C08G 18/48, C08G 18/76, E04F 15/00, B32B 27/40, C08G 18/12, C08L 75/08, C08G 101/00

(54) **PU-PREPOLYMER MIXTURE DERIVED FROM A CO2-BASED POLYOL**

(71) Applicant: Polytex Sportbeläge Produktions-GmbH, 47929 Grefrath (DE)
(72) Inventor: FINDER, Zdenka, 86701 Rohrenfels-Ballerdorf (DE); SICK, Stephan, 47877 Willich-Neersen (DE); HALLY, Stefan, 41334 Nettetal (DE); LOHR, Ivo, 47906 Kempen (DE)
(74) Representative: Richardt Patentanwälte PartG mbB

(57) **Abstract**

The invention relates to a method for producing a 1C polyurethane system (129) adapted for creating an elastic flooring (129, 136). The method comprises:
- creating (602) an initial mixture (900) comprising:
• a mixture of MDI monomers, the MDI monomers comprising 2,2' MDI, 2,4' MDI and 4,4' MDI, wherein at least 5,9% by weight of the initial mixture consist of the 2,2' MDI;
• a polyol component comprising a CO₂ based polyethercarbonate polyol (932), the polyethercarbonate polyol having a viscosity of at least 800 mPas at 25°C;

- reacting (604) the initial mixture into a prepolymer mixture, the prepolymer mixture comprising a prepolymer, the prepolymer mixture being adapted for use as the 1C polyurethane system.

## Description

### Field of the invention

This invention relates to a method of producing a 1C PU system adapted for generating elastic floorings, and a corresponding 1C PU system and elastic PU-based flooring.

### Background and related art

Elastic floorings - for example, floorings for a sports ground, e.g., an athletic track, or a playground - are commonly made of polyurethane (PU).

They are typically installed by unrolling a prefabricated PU rolled mat at its destination and gluing the PU mat onto the floor with a polyurethane adhesive. The production of the PU mat within a manufacturing plant may include performing a chemical reaction that quickly, typically within minutes, generates a foamed, solid PU layer. The prefabricated PU roll is produced in a sports ground factory and is transported - potentially over long distances - to the sports area where it is to be installed. After the PU rolled mat is rolled out, the edges of the lanes need to be connected with each other and sealed to prevent the forming of open crevices between the lanes.

Meanwhile, some systems are available that allow generating and applying a PU binder directly at the use site ("in situ"), thereby reducing transport costs and easing the installation of the elastic PU-based flooring. For example, the PU binder can be foamed into PU foam at the use site mechanically or chemically.

The majority of chemicals currently used for manufacturing elastic PU based layers for sport fields and running tracks are petrochemical substances originating from crude oil or petroleum oil or natural gas. They are products of the refinery process of petroleum oil. Today, a large number of petro-based polymers is available, including polyols with the desired properties for the production of artificial turf backings and elastic layers for sports fields, e.g. running tracks.

However, the use of petroleum oil is problematic as a non-renewable energy source is consumed.

### Summary

It is an objective of the present invention to provide a method of manufacturing an improved one component polyurethane system, also referred herein as "1C PU binder", adapted for generating elastic floorings (e.g. for running tracks) with a smaller CO₂ footprint as specified in the independent claims. Embodiments of the invention are given in the dependent claims. Embodiments of the present invention can be freely combined with each other if they are not mutually exclusive.

In a first aspect, the invention relates to a method of producing a 1C polyurethane system adapted for creating an elastic flooring, e.g. an outdoor flooring for a sports field. The method comprises creating an initial mixture comprising a mixture of MDI (methylene diphenyl diisocyanate) monomers and a polyol component. The MDI monomers comprise 2,2' MDI, 2,4' MDI and 4,4' MDI, wherein at least 5,9% by weight of the initial mixture consist of the 2,2' MDI. The polyol component comprises a CO₂ based polyethercarbonate polyol. The method further comprises reacting the initial mixture into a prepolymer mixture, the prepolymer mixture comprising a prepolymer, the prepolymer mixture being adapted for use as the 1C polyurethane system.

Said features may be advantageous because the use of CO₂ based polyethercarbonate polyol in combination with a comparatively high 2,2' MDI concentration may allow generating a PU binder that "consumes" CO₂ gas and has physicochemical properties, in particular a viscosity, that allows using the prepolymer mixture as a 1C PU binder for generating an elastic PU based flooring.

Meanwhile, new types of polyols are commercially available which are based on carbon dioxide (CO₂). Carbon dioxide, one of the main sources of global warming, is abundantly available. Using carbon dioxide-based polymers for plastics product production benefits the environment by turning a waste greenhouse gas into a useful raw material. The overall carbon footprint is reduced and an alternative carbon source beyond fossil hydrocarbons and bio-based materials is provided. Emerging technologies, as described for instance in EP 3219741 A1, now allow to efficiently transform atmospheric carbon dioxide into polyols, thereby creating a circular, sustainable economy in plastics production.

However, these new "CO₂ based" polyols are typically *polyethercarbonate polyols.* Applicant has observed that replacing the petro-based polyols currently used for generating elastic PU-based layers by *polyethercarbonate polyols* does not yield PU binders having the physicochemical properties desired in the context of the production of elastic sports floors, e.g. running tracks.

CO₂-based polyols currently available have been observed to be particularly suited e.g. for the production of mattresses and upholstered furniture. Mattresses and related products have particular requirements regarding e.g. elasticity, resilience, and density of the polyol types used for manufacturing the same. These requirements differ from the requirements of other plastics products such as, for example, artificial turf backings and PU based running tracks. It has been observed that the available CO₂-based polymers cannot be used as substitutes of the polymer types that are currently used for elastic PU based sport field grounds, because the PU binder made from a CO₂-based *polyethercarbonate polyol* does not have the desired properties. In particular, one component PU systems, also referred herein as "1C PU systems", "1C prepolymer mixtures" or "1C PU binders", *derived from a dioxide-based polyol* have been observed to be too viscous to allow using said polyols for the in-situ generation of elastic floorings, e.g. running tracks.

For example, in one empirical test, it was observed that adding a CO₂ based polyethercarbonate polyol to the standard mixtures of MDI monomer, a significant increase of viscosity was observed. The replacement of about 5% of the standard polyol by a CO₂ based polyethercarbonate polyol resulted in an increase of the viscosity by ca. 2000 mPas at 25°C. Thus, already the replacement of small amounts of the standard polyol by a CO₂ based polyethercarbonate polyol resulted in a prepolymer mixture that was unsuited for in situ generation of elastic outdoor floorings. However, an increased amount of 2,2' MDI monomers in the initial mixture was observed to successfully compensate this undesired effect.

On the other hand, the viscosity of the PU binder must not be too low, because in this case the CO₂ generated by the foaming reaction would leave the PU binder so fast that the resulting flooring is inelastic. It has been observed that by combining the comparatively viscous CO₂-based polyethercarbonate polyol with an increased amount of 2,2' MDIs, the resulting prepolymer mixture has the appropriate viscosity for being used as a PU binder for in situ generation of elastic PU based floorings.

PU binder must in addition fulfill specific requirements regarding reaction speed to allow for an in-situ installation of running tracks and other types of sports fields under various weather conditions (ambient moisture, temperature, etc.). It has been observed that the prepolymer mixture generated according to embodiments of the invention show the desired reaction speed that is fast enough to allow a hardening within several hours and is slow enough to allow homogeneous mixing of the prepolymer mixture with further components like rubber granules. As the moisture contained in the rubber granules may trigger or accelerate the curing process, an inhomogeneous mixing with the rubber may result in the generation of a flooring with an inhomogeneous distribution of rubber particles, an inhomogeneous density and an inhomogeneous curing speed.

According to embodiments, the MDI monomers of the initial mixture comprises the 2,2' monomeric MDI in an amount of 5.9% - 11.5% by weight of the initial mixture, the 2,4' monomeric MDI in an amount of 16.6% - 23.5% by weight of the initial mixture, and the 4,4' monomeric MDI in an amount of 16.1% - 17.0% by weight of the initial mixture. This MDI monomer mix is characterized by a particularly high amount of 2,2' MDI. Typically, the 2,2' MDI content of MDI premixes used for generating a prepolymer mixture comprise a significantly lower amount of 2,2' MDI, because the reaction speed of 2,2' MDI is comparatively low and also the speed of the transformation of the prepolymer mixture into a curated PU binder may be reduced. Nevertheless the above specified MDI monomer concentration was shown to be sufficiently reactive to allow the generation of a PU binder with hardening times of less than a day, typically only several hours.

According to embodiments, the CO₂ of the CO₂ based polyethercarbonate polyol is atmospheric CO₂, CO₂ of industrial facilities and/or CO₂ of a renewable CO₂ source. For example, the CO₂ obtained from a renewable CO₂ source may be generated by a bioreactor turning biomass into water and CO₂. This may be advantageous, because the CO₂ footprint of the PU binder is reduced. In fact, if artificial turf is incinerated in an incineration plant and if the generated CO₂ is used for producing a CO₂ based polyethercarbonate polyol, the generated PU binder may at least partially be "recycled".

According to embodiments, the CO₂ based polyethercarbonate polyol is generated by catalytic copolymerization of CO₂ with alkylene oxides in the presence of one or more H-functional starter substances. This process is described, for example, in EP3219741A1. Typically, a level of CO₂ incorporation of 10%-20% by weight of the polyethercarbonate polyol is achieved.

By reacting the components of the initial mixture into a prepolymer, a prepolymer mixture comprising a prepolymer and some unreacted components of the initial mixture is generated. According to embodiments, the prepolymer mixture comprises the prepolymer in an amount of 60-98%, preferably 70%-95%, in particular 88%-90% by weight of the mixture. The rest comprises non-reacted monomeric MDI and, optionally, oil (e.g. about 10%), pigments, and other additives.

According to embodiments, the CO₂ based polyethercarbonate polyol has a viscosity of 800 - 1200 mPa/s at 25°C, preferably a viscosity of 900-1100 mPa/s at 25°C. For example, the CO₂ based polyethercarbonate polyol can have a viscosity of 1000 mPa/s at 25°C. This would typically yield a prepolymer mixture that is highly viscous and that cannot be processed properly. However, as mentioned above, the high amount of 2,2' MDI monomers is adapted to compensate this effect.

According to embodiments, the CO₂ based polyethercarbonate polyol has an average molecular weight of 900-1100 g/mol and/or a hydroxyl number of 100-120 mg KOH/g. For example, the CO₂ based polyethercarbonate polyol can have a molecular weight of 1000 g/mol and/or an OH number of 112.

According to embodiments, the initial mixture further comprises a plant-based oil or naphthenic oil or a mixture thereof in an amount of 10%-15% by weight of the initial mixture. The plant-based oil can be, for example, linseed oil from flax seeds, rice bran oil from rice grains, castor oil, corn oil, palm oil, soybean oil, rapeseed oil, sunflower oil, peanut oil, or coconut oil or other plant-derived oils. Adding oils may have the advantage that the oil further decreases viscosity of the prepolymer mixture and thus compensates the raise in viscosity induced by the CO₂ based polyethercarbonate polyol. Moreover, plant-based oils reduce the size of the CO₂ footprint of the PU binder, because the oil is derived from plants. Plants transform atmospheric CO₂ into oil and other components.

According to embodiments, the initial mixture further comprising phosphor acid. This may allow increasing the shelf life of the generated prepolymer mixture.

For example, the generation of the initial mixture can comprise adding 0.005% - 0.01%, e.g. 0.009% by weight of the initial mixture phosphoric acid. The phosphoric acid is preferably a phosphoric acid having a concentration of about 85%.

According to embodiments, at least 10%, preferably 10%- 20% by weight of the polyol component consist of the CO₂ based polyethercarbonate polyol.

According to embodiments, at least 30%, preferably between 30% and 45% by weight of the polyol component consist of a further polyol having a viscosity of 200-500 mPas at 25°C. The use of a further polyol with comparatively low viscosity may further help compensating the high viscosity of the CO₂ based polyethercarbonate polyol.

According to embodiments, the further polyol has an average molecular weight of 1800 - 2200 g/mol.

According to embodiments, the further polyol is polypropylenglycol (PPG). For example, the PPG can have an OH- number 56, a viscosity of 350 mPas at 25°C, and an average molecular weight of 2000 g/mol. In one example, about 38% by weight of the polyol component consist of PPG.

According to embodiments, the initial mixture comprises:
- the 2,2' monomeric MDI in an amount of 5.9% - 11.5% by weight of the initial mixture;
- the 2,4' monomeric MDI in an amount of 16.6% - 23.5%
- the 4,4' monomeric MDI in an amount of 16.1% -17.0%
- a further polyol (e.g. PPG) with a viscosity of 250 - 450 mPas at 25°C in an amount of 30% - 45% by weight of the initial mixture;
- the polyethercarbonate polyol with a viscosity of 800-900 mPas at 25 °C. functionality in an amount of 10% - 20% by weight of the initial mixture;
- oil (in particular plant-based oil, e.g. castor oil) in an amount of 10%-15% by weight of the initial mixture; and
- phosphor acid in an amount of 0.005% - 0.01 % by weight of the initial mixture.

The initial mixture can further comprise pigments, rubber granules, dispersing aids, fillers, and rheology modifiers. The polyol component can comprise further polyols, in particular polyols manufactured at least partially from a renewable carbon source ("bio-polyols"), e.g. castor or soya or raps oil based polyesterpolyol. This may further reduce the size of the CO₂ footprint of the prepolymer mixture.

In a further aspect, the invention relates to a method for creating an elastic flooring, e.g. an elastic flooring of an indoor or outdoor sports field. The method comprises applying the prepolymer mixture created according to any one of the embodiments described herein on a ground, and letting the applied prepolymer mixture harden to form the elastic flooring.

Optionally, the prepolymer mixture is leveled with a paving machine or a device after it was applied on the ground and before the hardening process has completed to ensure that the surface of the flooring is level.

According to some embodiments, the prepolymer mixture is mixed with rubber granules for generating a "supplemented prepolymer mixture" or "PU-binder-granule mixture". The rubber granules are cheap and elastic and may provide flooring that is sufficiently thick to provide the desired cushioning effect.

Pigments, dispersing aids, fillers, flame retardants, etc. can be added to the initial mixture and/or can be added to the prepolymer mixture before the prepolymer mixture is applied on the ground.

According to embodiments, the elastic flooring is selected from a group comprising:
- an elastic subconstruction layer for athletic tracks and playgrounds;
- an elastic base layer for athletic tracks and playgrounds;
- an in-situ foamed elastic athletic track or playground surface;
- an outdoor surface, in particular a tile, a matt, a lane.

In a further aspect, the invention relates to an elastic flooring manufactured by a method according to any one of the embodiments of the method for generating an elastic flooring described herein.

In a further aspect, the invention relates to a 1C PU system adapted for creating an elastic flooring, the 1C PU system being manufactured by a method according to any one of the embodiments described herein.

When the initial mixture is transformed into the prepolymer mixture, the CO₂ based polyethercarbonate polyol is integrated, together with one or more further polyols, if any, in the prepolymer. The prepolymer and the elastic flooring made from the prepolymer thus may therefore not comprise the CO₂ based polyethercarbonate polyol in isolated form. However, a quantitative and qualitative analysis of the final material can be performed using NMR and ATR-IR (attenuated total reflection IR-spectroscopy) technology. Thus, it may be possible to determine whether a particular flooring was manufactured from a PU binder that was derived from a CO₂ based polyethercarbonate polyol. Moreover, in case a renewable carbon source provided the CO₂ that was used for generating the CO₂ based polyether carbonate, radiocarbon dating can be performed to determine if and in what amount a CO₂ based polyethercarbonate polyol was used for generating the PU binder for the flooring. Atmospheric CO₂ is the source of radioactive carbon C14. Fossil (petro-based) carbon sources comprise a lower amount of radioactive C14 isotopes and thus can be discerned from bio-based carbon sources by performing an isotope analysis (radiocarbon dating). Roughly half of all ¹⁴C atoms decay after 5700 years. Thus, a flooring with a significant share of a PU binder whose polyol component was derived from a renewable, recent CO₂ source should comprise a lower fraction of ¹⁴C atoms than purely petro-based floorings.

A "polymer mixture" as used herein is a mixture of polymers with different compositions, capable of being differentiated by their physicochemical properties, also referred to as blend after extrusion melting. The melting process combines the individual and distinguishable components of the mixture homogeneously, such that a polymeric material is generated with specific capabilities.

### Brief description of the drawings

In the following, embodiments of the invention are explained in greater detail, by way of example only, making reference to the following drawings:
"Polyurethanes" (PU) as used herein are any type of polymer containing a urethane linkage. The urethane linkage (carbamate group) is -NH-CO-O. PUs are formed by reacting isocyanates with compounds that have an active hydrogen, such as diols, that contain hydroxyl-groups. Since there are many compounds containing active hydrogens and many different diisocyanates, the number of PUs that can be synthesized is very large. The specific properties of the PU can be tailored to a specific need by combining the appropriate compounds.

Polymers are macromolecules made of smaller, repeating units known as monomers. Generally, they consist of a primary long-chain backbone molecule with attached side groups.

A "1C PU system" or "1C system" as used herein is a reaction mixture that cures into polyurethane polymers, even in the absence of an extender (as required by 2C systems). In preferred embodiments, the moisture of the environmental air or soil or the moisture in the supplements (e.g., rubber granules) is sufficient for initializing and completing the reaction of transforming the prepolymer mixture into polyurethane.

An "apparatus" as used herein is a portable device that can be carried by a user and used to apply the prepolymer mixture ("PU binder"), that was optionally mixed with further components, e.g. rubber granules, to the ground. Typically, the apparatus is used for in situ PU foam generation for smaller sports fields.

A "sport field," "pitch" or "sports ground" as used herein is an indoor or outdoor playing area for various sports, e.g., soccer, tennis, handball, sprint races and others.

A "foam" as used herein is a colloidal dispersion of a gas in a liquid or solid medium.

A "PU foam" as used herein is any liquid or hardened PU mass comprising gas bubbles or cells willed with gas. The CO₂ gas generated during the hardening process result in the generation of a cellular structure of the PU matrix of the binder. When the PU binder has hardened, the cells will comprise the CO₂ or environmental air. Preferably, the PU foam generated by the prepolymer mixture is a micro-foam as the mass of the binder in the rubber-granule-PU-binder mixture ("supplemented prepolymer mixture") may be too low to result in a significant foam generation and the bubbles may be very small.

When the prepolymer mixture is mixed with supplements, e.g., rubber granules, the components of the prepolymer mixture start reacting with the water contained in the air and/or in the supplements, thereby generating PU molecules and CO₂. Thus, at the moment when the mixture of the prepolymer mixture and the supplements is applied on the ground, the supplemented prepolymer mixture is typically a viscous liquid with gas bubbles, i.e., a foam. The polymerization and foaming reactions continue in the applied foam until the PU generation has completed and the elastic PU layer has completely hardened. At least a small fraction of the liquid reaction mixture may have already been transformed into PU at the moment of applying the liquid PU foam on the ground, whereby the remaining fraction of the reaction mixture may not yet have been transformed into PU.

The "hydroxyl number" is the number of milligrams of potassium hydroxide required to neutralize the acetic acid taken up on the acetylation of one gram of a chemical substance that contains free hydroxyl groups. The hydroxyl value is a measure of the content of free hydroxyl groups in a chemical substance, usually expressed in units of the mass of potassium hydroxide (KOH) in milligrams equivalent to the hydroxyl content of one gram of the chemical substance.

### Brief description of the drawings

In the following, embodiments of the invention are explained in greater detail, by way of example only, making reference to the drawings in which:
- Figure 1: depicts the application of in situ generated PU foam on a sports field ground;
- Figure 2: depicts an athletic track comprising multiple lanes;
- Figure 3: depicts the automatic intermixing of adjacent PU foam lanes;
- Figure 4: depicts three fresh PU foam lanes;
- Figure 5: depicts a paving machine that applies PU foam on the ground;
- Figure 6: is a flowchart of a method of generating a prepolymer mixture from a CO₂-based polyol that is adapted for generating an elastic PU layer; and
- Figure 7: depicts the composition of an initial mixture for generating a 1C PU based binder.

### Detailed description

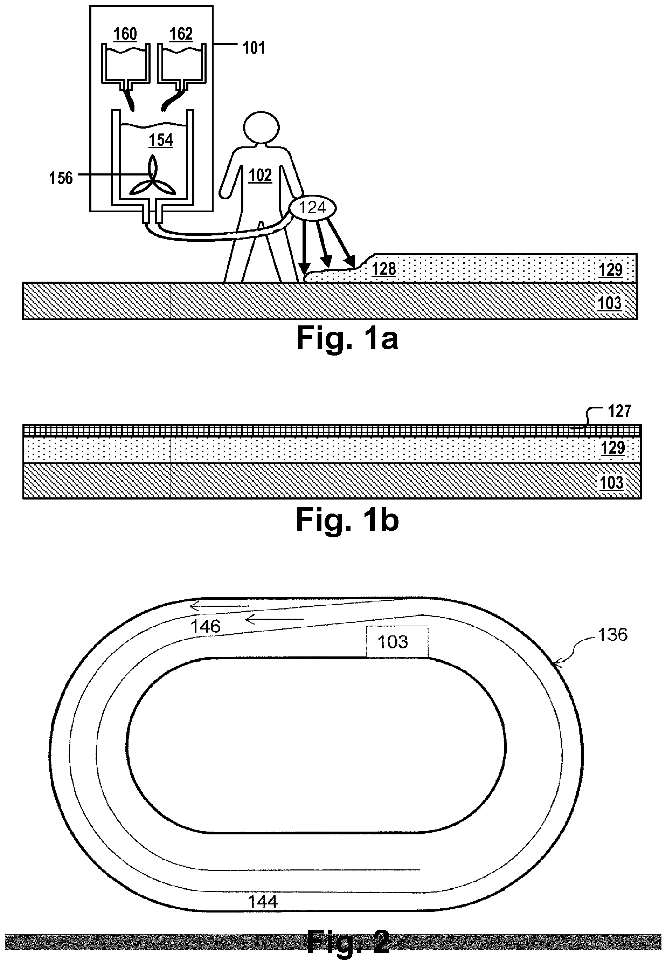

**Figure 1** depicts the application of in situ generated prepolymer mixture 128, also referred herein as "1C PU system," on a sports field ground 104. A user 102 carries a portable apparatus 101 comprising a reaction tank 154 with a mixer 156 that is coupled with a nozzle 124 via a duct. The prepolymer mixture 128, applied via the nozzle on the base layer 104, can be a prepolymer mixture or a "supplemented prepolymer mixture" comprising the prepolymer and additional optional components, e.g., rubber granules.

The system can comprise, for example, a single container holding the prepolymer mixture 128 or a supplemented prepolymer mixture.
According to another example, the system comprises a first container 160 with the prepolymer mixture and a second container 162 for rubber granules and/or other components to be mixed with the prepolymer mixture in the first container. The rubber granules may further increase the elasticity of the ground and may provide for a pleasant, natural haptic of the generated PU-based sports field.

Typically, the solidified elastic PU layer will have a thickness of about 1 to 5 cm.

The user 102 may wet the base layer 104 with water before applying the prepolymer mixture 129. However, this step is optional. In many cases, the humidity of the base layer or of the ambient air will be sufficient to allow the applied 1C PU mixture 128 to harden within several hours. When the prepolymer mixture comes into contact with water, e.g., during the mixing process with (moist) rubber granules and/or with moist air and/or after being applied on a moist base layer, CO₂ and the PU polymer are continuously generated, yielding an elastic, foamed PU layer.

The viscosity of the 1C PU system ("prepolymer mixture") 128 is low enough to allow self-leveling of the viscous prepolymer mixture or PU foam 128 into a plane PU layer that slowly solidifies into an elastic PU-based flooring 129, e.g., of a sports field. Thus, uneven ground surfaces, damaged areas and hollows in the ground are filled by the PU layer that solidifies after some hours at low temperatures into an elastic flooring of the sports field. However, the viscosity is preferably still high enough to retain the CO₂ bubbles to allow the PU foam to build. The PU foam is then allowed to dry and solidify completely. Depending on the temperature and other weather conditions, complete solidification is typically accomplished within 1 to 15 hours after the prepolymer mix was applied on the ground.

When the mixer has mixed the supplemented prepolymer mixture 128 homogeneously, the mixture starts generating PU polymers and CO₂ gas bubbles. The chemical reactions for generating the PU foam may start immediately and may immediately generate some CO₂ bubbles. The supplemented prepolymer mixture is transported from the mixer to a nozzle 124 and is applied directly on the ground of a sports field. The user 102 may apply multiple lanes of the PU reaction mixture to generate the PU flooring for a larger area. Preferentially, the PU reaction mixture is applied on the ground outdoors, but it is also possible to apply the method for generating indoor sports field floorings. In its solidified and dried state, the PU foam 129 is used as the PU flooring of the sports field.

Optionally, the solidified PU layer 129 can be coated with a protective and water-repellent layer 127 ("coating"), e.g., for increasing the resistance of the flooring to heat, UV light, rain, fungi and other factors, and/or to give the flooring a desired color. For example, the sealing coating may be a PU varnish.

Typically, the prepolymer mixture is applied to the ground within 30 minutes after its generation. The foam generation may start immediately after the prepolymer mixture is mixed with supplements. Hence, the supplemented prepolymer mixture may already comprise some CO₂ bubbles when applied to the ground. Nevertheless, the prepolymer mixture can still be characterized as a (viscous) liquid. While the chemical reactions for generating the CO₂ gas and the PU polymers continue, the liquid 1C PU system, having been applied on the ground, becomes more and more viscous, and is finally transformed into a solid PU mass, typically a PU foam, in particular micro-foam, that constitutes the elastic flooring. The in situ generated foam - at least right after its application on the floor - typically is sufficiently liquid to penetrate into small cracks in the ground, thereby mechanically fixing the PU floor when the PU has completely solidified. Thus, no additional leveling layer between the ground and the flooring layer may be necessary to compensate for surface irregularities on the ground. Rather, the applied 1C PU system and the resulting PU foam will fill depressions and indentations in the ground and will equalize when a sufficient amount is applied to the ground.

Thus, embodiments of the invention may allow for the generation of huge, seamless sports floors that automatically compensate for surface irregularities in the ground, and firmly attach to the ground without any adhesive layer, over a wide temperature range, preferably between + 6°C and + 50 °C.

**Figure 2** schematically shows an athletic track comprising multiple lanes. In this embodiment, the sports field is an oval track field. The user with the apparatus 101 or with the vehicle 100 moves around the field applying the mixture 128 on the ground. The mixture may have already started to slowly generate CO₂ bubbles and a viscous foam or micro-foam. The second lane 146 connects at the starting point of the first lane 144, whereby the apparatus or vehicle moves radially inwards so that the path of the apparatus 100 forms a spiral.

Irrespective of the geometry in which the reaction mixture is applied to the ground, the foam/mixture of the first lane 144 should be in a liquid state when the adjacent second lane is applied 146. If the foamed prepolymer mixtures 128 of the first and the second lanes 144, 146 are both liquid, not cured, the foam of both lanes 144, 146 will be mixed together in the contact zone and/or will firmly bond together to create an improved continuous PU flooring. Furthermore, the user 102 can use a leveling unit 126 on the vehicle or a mechanical tool to smooth the PU foam to produce an even and smooth surface 129. The mixture 128 for the second lane 146 is applied before the foam of the first lane 144 solidifies (is cured).

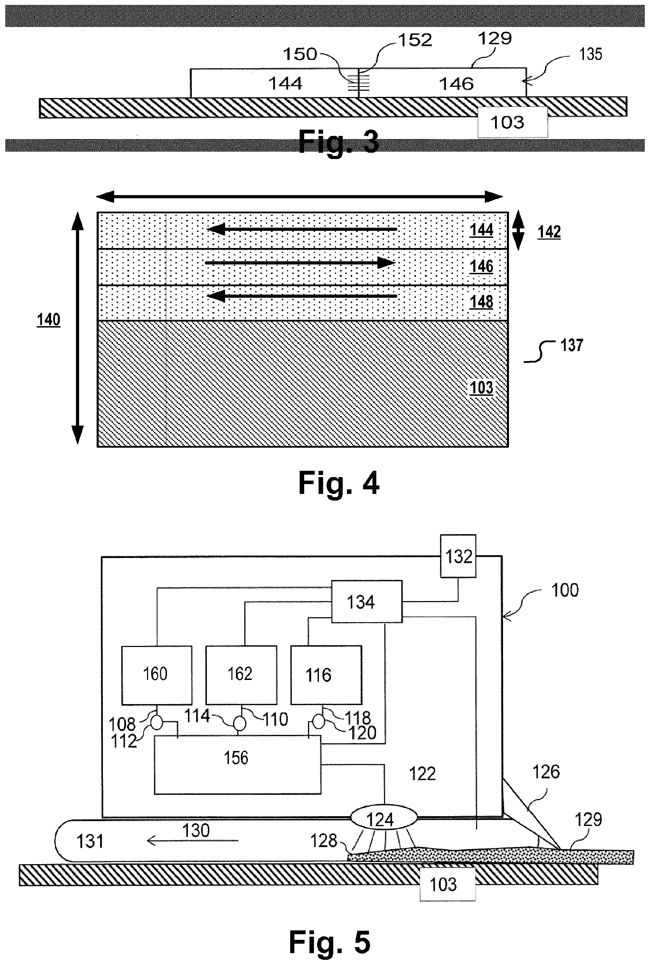

**Figure 4** shows one embodiment of a PU flooring of a sports field comprising multiple lanes, and **figure 3** depicts the automatic intermixing of adjacent PU foam lanes. The ground 103 to be covered with a polyurethane flooring can be a rectangular sports field 137 with a length and a width 140. The ground 103 may be prepared, e.g., concreted and/or leveled, or unprepared. The user 102 may use a portable apparatus 101 as shown in Fig. 1 a or a vehicle 100 as shown in Fig. 5 for applying a lane of the liquid (optionally supplemented) prepolymer mixture 128 having a width 142 that is smaller than the width 140 of the sports ground 137. Therefore, the mixture 128 is applied to the ground 103 in lanes 144, 146, 148, so that adjacent lanes 144, 146, 148 are in contact with each other. The liquid (supplemented) prepolymer mixture 128 of the second lane 146 immediately intermixes with and generates a coherent mass with the mixture 128 of the first lane 144 (see **figure 3**) so that a side edge 150 of the first lane 144 is in contact with the side edge 152 of the second lane 146. The side edge 135 would come into contact the side edge of lane 148 once said lane is applied on the ground.

In case a vehicle is used, the vehicle may be equipped with a leveling unit 126 and an injection unit 126. The leveling unit is wider in shape than the injection unit 124 so that the leveling unit 126 can smooth the transition from the first lane 144 to the second lane 146.

**Figure 5** depicts a system 100, e.g., a paving machine that applies a supplemented or non-supplemented prepolymer mixture 128 on the ground, as depicted in Fig. 1. The mixture 128 starts to generate CO₂ and to polymerize into PU upon being brought into contact with water, e.g., the moisture in the air or in the soil. The mixture 128 can comprise additives, e.g., emulsifiers and/or foam stabilizers, e.g., high sheer-resistant silicone foam stabilizers. The mixture 128 is preferably free of catalysts that are typically used to enhance the reactivity of 1C PU mixtures. An overview of available additives is given, for example, in G. Oertel, Polyurethane Handbook, 2nd Edition, Carl Hanser Verlag, München, 1994, chapter 3.4.

The system 100 can comprise tanks 160, 162, wherein the first tank 160 contains the prepolymer mixture and the second tank 162 contains rubber granules and/or further components. Both tanks 160, 162 are connected with ducts 108, 110 to a mixing unit 156 in which the components are combined with a supplemented prepolymer mixture 128 for an elastic PU flooring. Each duct 108, 110 comprises a valve 112, 114 for dosing the amount of prepolymer mixture with rubber granules that flow from the respective tank 160, 162 to the mixing unit 156. The ducts 108, 110 may contain a supply unit, for example, a pump. In the example depicted in Fig. 5, the apparatus is a vehicle, but the portable apparatus depicted in Fig. 1a could likewise contain the same or functionally equivalent components as described for the vehicle in Fig. 5.

Optionally, the system 100 can have an additional tank 116 containing water for wetting the base layer before the mixture 128 is applied. The additional tank 116 can be connected with a duct 118 to the mixing unit 156 or to the outside. The duct contains a valve 120. The system 100 may include various tanks for various additives, depending on the desired number of additives to be combined with the mixture 128 for the polyurethane flooring.

The mixing unit 156 provides the means for producing a supplemented prepolymer mixture for in-situ generation of an elastic PU flooring. The mixing unit 106 is connected with a duct 122 to an application unit 124 that is configured for applying the prepolymer mixture 128 optionally comprising rubber granules to a ground 103. The application unit 124 may contain various nozzles for applying the mixture 128 to the ground 103. The nozzles may be spaced out evenly over the entire width of the application unit 124. Alternatively, there may be a single nozzle or a bundle of nozzles, and the user may have to move the nozzle smoothly from one side to the other to spread the mixture 128 evenly over the ground (see Fig. 1a).

Furthermore, the system 100 comprises a leveling unit 126 for leveling and smoothing the applied mixture 128. The leveling unit 126 may be a scraper, which is located in the drive direction 130 of the apparatus 100 behind the injection unit 124. The leveling unit 126 is configured for smoothing the surface of the applied mixture 128 and/or for taking up excess foam.

The vehicle comprises a driving unit 131 for driving the apparatus 100 in the drive direction 130.

Furthermore, a sensor 132 for measuring environmental conditions may be provided as part of the vehicle 100. The sensor 132 may be configured for measuring the air temperature, the ground temperature, the relative humidity or other climate conditions. Various sensors for determining various environmental data may be provided.

The valves 112, 114, 120, the mixing unit 156, the application unit 124, the leveling unit 126, the drive unit and the sensor 132 are connected to a control unit 134. The control unit 134 is configured for receiving environmental data measured by the sensor 132 and/or to control the valves 112, 114, 120, the mixing unit 106, the application unit 124, the drive unit 131 and the leveling unit 126, depending on the environmental data received. For example, the vehicle may stop applying the mixture when the measured environmental temperature is below +6°C and/or may take into account the geometry of the ground, the planned path, the respective length of each lane 144, 146, 148, the thickness of the polyurethane flooring and the speed of the system 100 (vehicle or portable apparatus) into the process of the determination of the mixture 128 in order to ensure that the foam of the first lane 144 is not cured before the foam of the second lane 146 is applied, and/or to ensure that a sufficient amount of PU foam is applied to reach the desired minimum thickness and elasticity of the PU flooring.

In the described embodiment, the sensor 132 is attached to the system 100 so that the environmental conditions are measured at the location of the apparatus 100. Therefore, the mixture and the process parameters can be adapted continuously to the current conditions so that the amount of prepolymer mixture applied per m² of the ground is constant and does not depend on the speed of the vehicle 100.

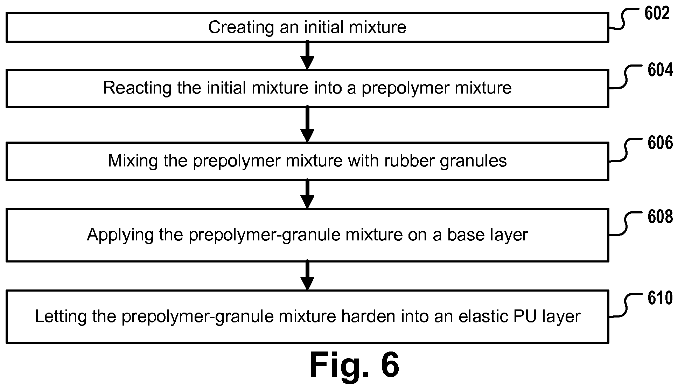

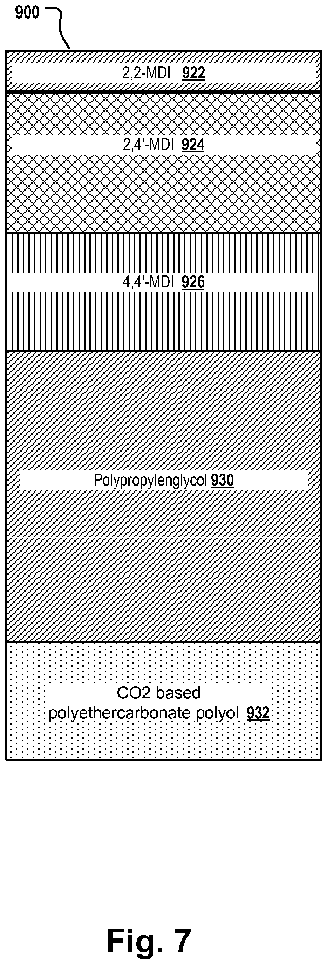

**Figure 6** is a flowchart of a method of creating a 1C PU system adapted for generating an elastic PU flooring. In the first step 602, an initial reaction mixture is generated, e.g., an initial mixture 900 depicted in figure 7.

Then in step 604, the initial reaction mixture is transformed into a prepolymer mixture. Steps 602 and 604 are typically performed in a factory at temperatures higher than room temperature, e.g., 30°C-60°C.

For example, a mixture of the 2,2', 2,4' and 4,4' MDI monomers is transferred into a reactor and heated to 30°C. Hereafter the single components, in particular the polyol(s) of the polyol component and the plant-based oil or naphthenic oil (commercially available e.g. as "Nyflex") are added stepwise and are mixed under stirring in a temperature in a range of 40°C-60°C, preferably 40°C-45°C. Further possible additives are, for example, extenders and rheology modifiers such as propylene carbonate (commercially available e.g. as Jeffsol PC), are added under stirring.

Between every step a mixing time of about 15 minutes is kept. After 45 to 60 minutes, the phosphoric acid is added. The phosphoric acid will stop the reaction to provide a stable prepolymer mixture and to improve the storage stability. The phosphoric acid should be added not earlier than having stirred the otherwise complete initial mixture for at least 45 minutes, because otherwise the phosphoric acid would stop the polymerization reaction before the transformation of the components of the initial mixture in the prepolymer is complete. This would result in an undesired low median value of the molecular weight distribution of the prepolymer molecules.

After a reaction time of 1 hour, the prepolymer contains 12-15% of monomeric MDI (2,4' MDI and 2,2'MDI) . After 24 hours (the reaction may slowly continue even after having added the phosphoric acid), the prepolymer mixture contains only 10-12% monomeric MDI, the remainder being prepolymer and oil.

In some embodiments, the generated prepolymer mixture has an NCO content of 2%-22% by weight of the prepolymer mixture, in particular 4%-17% by weight of the MDI/prepolymer mixture.

The resulting prepolymer mixture is then cooled to room temperature and stored until it is used.

In the optional step 606, the prepolymer mixture generated in step 604 is mixed with additional substances, rubber granules in particular. The rubber granules can be, for example, SBR, EPDM (in particular sulphur or peroxidic crosslinked EPDM) rubber granules, or rubber granules made from recycled tires, or thermoplastic elastomers like SEBS (styrene ethylene butadiene styrene block copolymer) or SES (styrene ethylene styrene block copolymer).

The mixing step 606 will bring the components of the prepolymer mixture in contact with the moisture in the air and/or in the additional substances, thereby triggering the generation of CO₂ and PU foam. This step is typically performed at the use site and may take more than 10 minutes, e.g., more than 20 minutes to ensure the homogeneous mixing of all components.

Next in step 608 the homogeneous mixture generated in step 606 is applied on the ground 103. The PU polymerization reaction will continue in the applied prepolymer mixture 128. In step 610 the applied supplemented prepolymer mixture is allowed to harden. Depending on the temperature and ambient moisture, this is typically achieved in less than 36 hours, or less than 18 hours, or even less than 12 hours.

After applying the PU reaction mixture to the ground, the ground is optionally smoothed and leveled to a predetermined roughness and level. In preferred embodiments, the viscosity of the PU foam is small enough to allow self-leveling. Optionally, the solidified, cured PU layer is coated with an additional, protective layer 127. A separate step to anneal edges of two adjacent lanes to each other is not necessary.

**Figure** 7 illustrates the composition of an initial mixture 900 for generating a prepolymer mixture adapted for generating an elastic PU layer.

A "prepolymer", also referred to as "NCO prepolymer", is a prepolymer generated by reacting an organic polyisocyanate, in particular a mixture of MDI monomers, with an excess of an NCO-reactive compound, in particular polyols.

According to some embodiments, the initial mixture comprises about 10%-15% by weight oil, herein also referred to as "process oil", which is not an educt in the chemical reaction that generates the prepolymer. Thus, the resulting prepolymer mixture comprises the process oil, the monomeric MDI and the prepolymer. Adding process oil to the initial mixture may be advantageous, because it has been observed that oil reduces the viscosity of the prepolymer mixture, thereby easing the mixing of the prepolymer mixture with rubber granules and/or easing the even spreading of the prepolymer mixture over the ground.

According to the depicted example, the following components were added to provide the initial mixture 900 (in % by weight of the initial mixture):
- 2,2' monomeric MDI: 5.9%-11,5%, in particular is 6,5 %;
- 2,4' monomeric MDI: 16.6 %-23.5%, in particular 17.2%;
- 4,4' monomeric MDI min. 16.1%-17.0%, in particular 16.5 %;
- PPG 2000: 30%-45%, in particular 38%;
- CO₂ based polyethercarbonate polyol: 10%-20%, in particular 15%;
- Oil: 10%-15%, in particular 11%;
- Phosphoric acid (85%): 0.005%-0.01%, in particular 0.009%.

According to embodiments, the prepolymer mixture 128 is generated by reacting the monomeric and polymeric MDI component and the polyol component of the initial mixture 900 with each other. Polyurethane prepolymers are formed by combining an excess of diisocyanate monomers with a premix polyol. One of the NCO groups of the diisocyanate monomers reacts with one of the OH groups of the premix polyol. The other end of the polyol reacts with another diisocyanate. The resulting prepolymer has an isocyanate group on both ends. The prepolymer is a diisocyanate itself, and it reacts like a diisocyanate but with several important differences. When compared with the original diisocyanate, the prepolymer has a greater molecular weight, a higher viscosity, a lower isocyanate content by weight (%NCO), and a lower vapor pressure. Prepolymers can be made under controlled conditions in a manufacturing plant. A dry nitrogen atmosphere protects isocyanates from atmospheric moisture and protects polyols from oxidation.

The NCO groups of the MDI monomers and polymeric MDI that may be formed as an intermediate product react with the OH groups of the polyol component in the initial mixture, changing the initial mixture into a prepolymer mixture comprising a prepolymer. Not all educts in the initial mixture react into the prepolymer, however; therefore, the prepolymer mixture comprises some remaining educts, in particular some monomeric MDI. The viscosity of the prepolymer mixture strongly depends on the type of prepolymer generated and hence strongly depends on the composition of the initial mixture.

The generated prepolymer mixture can be stored at room temperature for several months or longer. Then, the prepolymer mixture and/or the supplemented prepolymer mixture with the rubber granules can be transported to the use site.

### List of reference numerals

- 100: vehicle
- 101: portable apparatus
- 102: user
- 103: base layer
- 108: duct
- 110: duct
- 112: valve
- 114: valve
- 116: tank
- 118: duct
- 120: valve
- 122: duct
- 124: nozzle
- 126: leveling unit
- 128: applied prepolymer mixture (with or without rubber granules)
- 129: hardened elastic PU layer
- 130: drive direction
- 131: drive unit
- 132: sensor
- 134: control unit
- 135: side edge of lane
- 136: running track
- 137: sports field
- 140: width of sports field
- 142: width of a lane
- 144: lane
- 146: lane
- 148: lane
- 150: side edge of lane
- 152: side edge of lane
- 154: mixing container
- 156: stirrer
- 160: first container
- 162: second container
- 602-608: steps
- 900: initial mixture
- 922: 2,2' MDI monomer
- 924: 2,4' MDI monomer
- 926: 4,4' MDI monomer
- 930: PPG
- 932: polyethercarbonate polyol

## Claims

1. A method for producing a 1C polyurethane system (129) adapted for creating an elastic flooring, the method comprising:
- creating (602) an initial mixture (900) comprising:
• a mixture of MDI monomers, the MDI monomers comprising 2,2' MDI, 2,4' MDI and 4,4' MDI, wherein at least 5,9% by weight of the initial mixture consist of the 2,2' MDI;
• a polyol component comprising a CO₂ based polyethercarbonate polyol (932);
- reacting (604) the initial mixture into a prepolymer mixture, the prepolymer mixture comprising a prepolymer, the prepolymer mixture being adapted for use as the 1C polyurethane system.

2. The method of claim 1, the MDI monomers of the initial mixture comprising:
- the 2,2' monomeric MDI in an amount of 5.9% - 11.5% by weight of the initial mixture;
- the 2,4' monomeric MDI in an amount of 16.6% - 23.5% by weight of the initial mixture; and
- the 4,4' monomeric MDI in an amount of 16.1% - 17.0% by weight of the initial mixture.

3. The method of any one of the previous claims, the CO₂ of the CO₂ based polyethercarbonate polyol being atmospheric CO₂, CO₂ of industrial facilities and/or CO₂ of a renewable CO₂ source.

4. The method of any one of the previous claims, the CO₂ based polyethercarbonate polyol being generated by catalytic copolymerization of CO₂ with alkylene oxides in the presence of one or more H-functional starter substances.

5. The method of any one of the previous claims the prepolymer mixture comprising:
- the prepolymer in an amount of 60-98%, preferably 70%-95% by weight of the mixture.

6. The method of any one of the previous claims, the polyethercarbonate polyol having a viscosity of at least 800 mPa/s at 25°C, in particular a viscosity of 800 - 1200 mPa/s at 25°C, in particular a viscosity of 900-1100 mPa/s at 25°C.

7. The method of any one of the previous claims, the polyethercarbonate polyol having an average molecular weight of 900-1100 g/mol and/or a hydroxyl number of 100-120 mg KOH/g.

8. The method of any one of the previous claims, the initial mixture further comprising a plant-based oil or a naphthenic oil in an amount of 10%-15% by weight of the initial mixture.

9. The method of any one of the previous claims, the initial mixture further comprising phosphor acid.

10. The method of any one of the previous claims, wherein at least 10%, preferably 10%- 20% by weight of the polyol component consist of the polyethercarbonate polyol.

11. The method of any one of the previous claims, wherein at least 30%, preferably between 30% and 45% by weight of the polyol component consist of a further polyol (930) having a viscosity of 200-500 mPas at 25°C.

12. The method of claim 11, the further polyol having an average molecular weight of 1800 - 2200 g/mol.

13. The method of claim 11 or 12, the further polyol being Polypropylenglycol (PPG).

14. A method for creating an elastic flooring (129, 136), the method comprising:
- applying (608) the prepolymer mixture created according to any one of claims 1-13 on a ground; and
- letting (610) the applied prepolymer mixture harden to form the elastic flooring.

15. The method of claim 14, the method comprising:
- Mixing (606) the prepolymer mixture with rubber granules before the prepolymer mixture is applied on the ground.

16. The method of any one of claims 14-15, the elastic flooring being selected from a group comprising:
- an elastic subconstruction layer for athletic tracks and playgrounds;
- an elastic base layer for athletic tracks and playgrounds;
- an in-situ foamed elastic athletic track or playground surface;
- an outdoor surface, in particular a tile, a matt, a lane.

17. An elastic flooring manufactured by a method according to any one of claims 14-16.

18. A 1C PU system adapted for creating an elastic flooring manufactured by a method according to any one of claims 1-13.
